# EUROPÄISCHE PATENTSCHRIFT

(11) **EP 0 885 681 B1**
(45) Veröffentlichungstag und Bekanntmachung des Hinweises auf die Patenterteilung: **10.09.2003**
(21) Anmeldenummer: 98111030.7
(22) Anmeldetag: 16.06.1998
(51) Int. Cl.: B23K 1/08, F24J 2/04

(54) **Verfahren zur Herstellung eines flächigen Wärmetauschers oder -wandlers und Vorrichtung zur Durchführung des Verfahrens**
Method for manufacturing a flat heat exchanger or converter and device therefor
Procédé pour la fabrication d'un échangeur ou convertisseur de chaleur plat et dispositif pour la mise en oeuvre du procédé

(30) Priorität: 17.06.1997 DE 19725407
(43) Veröffentlichungstag der Anmeldung: 23.12.1998
(73) Patentinhaber: Solvis GmbH & Co. KG, 38112 Braunschweig (DE)
(72) Erfinder: Hesse, Gunther,Dipl.-Ing.,, 38108 Braunschweig (DE); Jäger, Helmut, Dipl.-Ing.,, 38533 Vordorf (DE)
(74) Vertreter: Einsel, Martin, Dipl.-Phys.

(56) Entgegenhaltungen:
- DD-A- 240 161
- DE-A- 4 209 133
- GB-A- 2 010 466
- US-A- 4 324 028
- US-A- 4 476 856

## Beschreibung

Die Erfindung betrifft ein Verfahren zur Herstellung eines flächenförmigen Wärmetauschers und/oder -wandlers für Solarkollektoren, bei dem ein oder mehrere Bleche und ein oder mehrere Wärmeleitelemente mit einem Lotmittel benetzt und dadurch verbunden werden. Ein gattungsgemäßes Verfahren ist aus der US-A-4 324 028 bekannt.

Derartige flächenförmige Wärmetauscher oder -wandler werden auch als Absorber oder Platinen für Solarkollektoren bezeichnet.

Verfahren zur Herstellung eines Gesamtabsorbers oder einer Platine sind bekannt. Ein Gesamtabsorber ist dabei aus mehreren miteinander verbundenen Absorbem aufgebaut. Als Absorber wird eine Finne mit angefügtem Rohr bezeichnet. Eine solche Finne ist selektiv oder nur schwarz gefärbtes Blech, welches die Sonnenstrahlung in Wärme umwandelt. Eine Platine ist ein mit einem flächigen Blech verbundenes Rohrgeflecht in der Größenordnung eines Gesamtabsorbers. Das Rohrgeflecht kann eine beliebige Anordnung eines Mäanders oder eines parallel durchströmten Sammlerverteilersystems sein.

Passive und aktive Wärmeleitelemente sind leitungsartige Anordnungen, die auf der Basis der bekannten physikalischen und insbesondere thermodynamischen Prinzipien unter Zuführung externer Energie oder energieneutral Wärmeenergie sammeln, konzentrieren und transportieren können. Die vorgenannten Rohrgeflechte stellen also eine besondere Form dieser Wärmeleitelemente dar. Der Begriff "Wärmeleitelemente" schließt dabei zum Beispiel auch Kühlrohre ein, da auch bei diesen Wärme transportiert wird.

Grundsätzlich wird zwischen zwei unterschiedlichen Fügeverfahren bzw. Herstellungsverfahren für die Absorber unterschieden. Dabei ist zum einen das serielle oder sequentielle und zum anderen das parallele oder simultane Fügeverfahren oder Herstellungsverfahren zu nennen.

Bei dem seriellen Verfahren werden einzelne Streifen in Serie nacheinander zusammengefügt. Dies bedeutet, daß Bleche und Rohre (jeweils einzeln nacheinander, also sequentiell) miteinander verbunden werden. Diese Verbindung kann beispielsweise durch Ultraschallschweißen, durch Hochfrequenzschweißen, Widerstandsschweißen, Plasmaschweißen oder durch ein Rollformverfahren geschehen.

Ein paralleles Verfahren ist beispielsweise das Reflow-Verfahren oder auch das Dampfphasenlöten, bei dem ein Mäander (Rohrgeflecht) mit Lötpaste versehen und mit einem Blech in einem Ofen bei entsprechender Temperatur verlötet wird.

Es hat sich gezeigt, daß bei den geschilderten Verfahren eine Veränderung der Rohrgeometrie oder der Genauigkeit des vorgefertigten Rohrgeflechtes zu Problemen führt, da kostspielige und zeitraubende Umstellungen innerhalb des Fügeverfahrens erforderlich werden. Auch können die geschilderten bekannten Verfahren nicht einen beliebig geformten Mäander eines Rohrgeflechtes an jeder Stelle mit einem Blech sicher zusammenfügen. Entsprechende Aufnahmen für das Fügen wären ausgesprochen teuer und daher indiskutabel.

Als problematisch erweist sich auch das streifenweise Zusammenfügen von Rohren und Blechstrelfen, da im Vergleich zur Blechstärke die Rohrwandungen zumeist dick sind und ein Verformen der Blechstreifen nach dem Fügen die Folge ist. Dadurch wird anschließend das Zusammenfügen zweier Bleche problematisch.

Alternativ hierzu wird in der US-PS 4,324,028 vorgeschlagen, zunächst durch mechanische Verformung und formschlüssige Verbindungen ein stabiles Blechkanalsystem herzustellen. Dabei wird das Absorberblech durchbrochen und Teile des Kanalsystems durch das Absorberblech durchgesteckt und verformt. Nachdem die Verbindung zwischen Absorberblech und Fluidkanal durch diese mechanische Verformung hergestellt worden ist, wird anschließend die Dichtheit dieses Kanals dadurch erzielt, dass flüssiges Lotmittel durch den Kanal gepumpt wird. An den Durchtrittsstellen werden die Lücken durch Benetzung und Verfestigen des vormals flüssigen Lots gedichtet. Dieses Verfahren macht ein aufwendiges mechanisches Bearbeiten erforderlich.
Aus der DD 240 161 ist für andere Anwendungsfälle, nämlich für Wärmetauscher von Kühlem und Heizteilen für Fahrzeuge, ein Verfahren bekannt, bei dem analog zur Elektronik lediglich Lötstellen verlötet werden. Überstehende Rohrenden stoßen durch einen Kühlerboden und werden dort verlötet. Dabei wird das Lot durch Kapillarwirkung in ein Spalt gezogen. Ziel des Verfahrens ist es dabei, den Ringspalt zwischen Kühlerboden und durchgebrochenem Rohrende zu füllen. Das Verfahren ist für Teile kleinerer Dimension gedacht.

Aufgabe der vorliegenden Erfindung ist es demgegenüber, ein Verfahren zur Herstellung eines Wärmetauschers oder -wandlers für Solarkollektoren zu schaffen, bei dem ein oder mehrere Bleche mit einem oder mehreren Rohrgeflechten oder Wärmeleitelementen verbunden werden, wobei aber die geschilderten Probleme der bekannten Fügeverfahren nicht mehr auftauchen und ein kostengünstiges und möglichst unkompliziertes Herstellungsverfahren eines solchen Absorbers geschaffen wird.

Die Aufgabe wird bei einem gattungsgemäßen Verfahren dadurch gelöst, dass das oder die Wärmeleitelemente das oder die Bleche berühren, dass ein Bereich aus bewegtem flüssigem Lotmittel erzeugt wird, dass dieser Bereich und die Bleche mit Wärmeleitelementen relativ zueinander bewegt werden, und dass die Bleche mit den Wärmeleltelementen simultan verbunden werden.

Weiterbildungen der Erfindung sind in den Unteransprüchen definiert.

Dadurch wird ein Verfahren zur Herstellung eines Absorbers geschaffen, mit dem alle Rohrgeflechte oder aktiven Wärmetauschelemente gleichzeitig mit den Blechen verlötet werden. An beliebig vielen Lötpunkten oder flächigen Lötstellen geschieht dies parallel und schnell gleichzeitig. Jede Biegung des Rohrgeflechtes wird dabei sicher gelötet, da die Welle oder der Schwall als Bereich aus bewegtem Lotmittel besonders bevorzugt das Blech stets von unten und unter Einwirkung von Kapillarkräften gleichmäßig benetzt, unabhängig von der Formgebung des Rohrgeflechtes. Bei dem Verfahren zur Herstellung des Absorbers sind nur wenige Schritte erforderlich, wodurch es sehr schnell und dadurch auch sehr kostengünstig wird.

Es können bei diesem Verfahren auch beliebig viele, beispielsweise ressourcensparend vom Durchmesser her sehr kleine Rohre für das Rohrgeflecht ver wendet werden, wobei die Fügegeschwindigkeit bezogen auf den Quadratmeter gleich bleibt. Auch hierdurch werden Kosten gespart. Im Vergleich zu den bekannten Verfahren können durch das erfindungsgemäße Verfahren deutlich dünnere Bleche verwendet werden, was sich insbesondere aus der Berechnung des Flossenwirkungsgrades F' ergibt. Hierbei werden ebenso Kosten gespart wie dadurch, daß auch die Umrüstzeiten der Anlagen zur Absorberherstellung minimiert werden, die erforderlich sind bei der Umstellung auf ein anderes Absorberkonzept.

Neben Absorbern können auch andere flächige Wärmetauscher oder -wandler oder Elemente dafür hergestellt werden.

Aufgrund des unkomplizierten Aufbaus, insbesondere hinsichtlich der Mechanik der Vorrichtung zur Herstellung des Absorbers ist auch das Herstellungsverfahren sehr einfach. Als besonders vorteilhaft ergibt es sich, daß keine Oberflächenbeschädigung auf der selektiven Schicht, welche der Sonne ausgesetzt ist, auftritt, was ansonsten zu einem Wirkungsgradverlust führen würde. Das Rohrgeflecht wird vorteilhaft vielmehr auf der Unterseite des Bleches angebracht, wodurch die die selektive Schicht tragende Oberseite des Bleches völlig unbeansprucht bleibt beim Lötvorgang. Vielmehr tritt eine Wirkungsgraderhöhung ein, da der Flossenwirkungsgrad F' steigt aufgrund der Tatsache, daß mit dem Lotmittel auch der zwischen Blech und jeweiligem Rohr des Rohrgeflechtes verbliebene Spalt infolge der Kapillarkräfte gefüllt wird. Der Wärmeübergang von den Blechen in das Rohrgeflecht oder die Wärmeleitelemente wird dadurch deutlich verbessert. Dies geschieht insbesondere auch aufgrund der mit einem Radius versehenen Formgebung des zwischen Rohr und Blech in dem Spalt verbliebenen Lotmittels.

Besonders vorteilhaft muß auch keine Schweißnaht mehr, wie dies bei dem Stand der Technik erforderlich war, nachbearbeitet werden, wodurch sich beim Stand der Technik das Erfordernis ergab, daß die Bleche nachträglich erneut mit schwarzer Farbe auf ihrer Oberseite versehen werden mußten. Die schwarze Farbe dient zur besseren Aufnahme der von der Sonne gespendeten Wärme in den Blechen.

Beim Stand der Technik werden einzelne dünne Rohre an den Längsseiten mit den Blechstreifen versehen. Die Blechstreifen werden anschließend nebeneinander gelegt und miteinander verbunden. Die Rohre münden in ein quer zu diesen angeordnetes Verteilerrohr bzw. Sammelrohr mit einem größeren Durchmesser. Demgegenüber kann mit dem erfindungsgemäßen Verfahren ein kompletter Mäander in einem Arbeitsgang mit dem darüber angeordneten Blech verlötet werden. Verbindungsstücke zwischen den einzelnen Absorbem sind dadurch nicht mehr erforderlich. Auch das Verteilerrohr oder Sammlerrohr wird vorteilhaft nicht mehr benötigt. Das gesamte Rohrgeflecht kann vielmehr vorab in eine solche Form gebracht und gebogen werden, die für den entsprechenden Anwendungszweck als besonders geeignet erscheint. Der Mäander oder das gebogene Rohr ist dabei vorzugsweise als Endlosschleife gebildet.

Vorteilhaft kann auch die Disposition der Absorberfläche kurzfristig erfolgen, da lediglich im Moment der Herstellung entschieden zu werden braucht, welcher Quadratmeter der Absorberfläche zu der einen Sorte oder zu der anderen Sorte Absorber verbaut werden soll.

Da vor allem im Gegensatz zum Stand der Technik mit unterschiedlich dicken Rohren besonders dünne Rohre verwendet werden können, insbesondere aufgrund des guten Wirkungsgrades, können einerseits Gewicht und andererseits dadurch Kosten, vor allem wegen des geringeren Kupferverbrauchs für die Rohre, eingespart werden. Die Vorrichtung zur Herstellung eines Absorbers kann völlig unabhängig von einzelnen Absorberlieferanten jedes beliebige Blech oder Coil verarbeiten. Dadurch wird eine größere Unabhängigkeit des Absorberherstellers hinsichtlich Kalkulation und Wettbewerbsfähigkeit geschaffen.

Auf die sonst übliche Prägung der Bleche kann vorteilhaft verzichtet werden, da die Bleche aufgrund ihrer räumlichen Ausdehnung in Verbindung mit einem in der x- und y-Richtung verbundenen Rohrgeflecht eine deutliche Versteifung erfahren. Da die Oberfläche des Absorbers deutlich weniger Unebenheiten zeigt als die Oberflächen der nach dem Stand der Technik hergestellten Absorber, bei denen sich, wie oben beschrieben, durch das jeweils separate Verlöten von Einzelrohren mit Blechstreifen und der letzteren untereinander starke Wellungen zeigen, kann ein Einbau der Absorber in einem flacheren Kollektorkasten erfolgen. Um die fertiggestellte Platine, also das Blech mit Rohrgeflecht, in einem Rahmen des Kollektorkastens eindeutig fixieren zu können, sind im Vergleich zum Stand der Technik, aufgrund des (frei wählbaren) großen einteiligen Blechs viel weniger Querverbindungen erforderlich.

Die Kosten für die Herstellung des Absorbers sind auch bereits dadurch sehr viel geringer, daß in einem Arbeitsgang viel größere Flächen von Blechen mit Rohrgeflechten zusammengefügt werden können. Der Kupfereinsatz auf der Rohrseite läßt sich bei geeigneter Berechnung, insbesondere durch geeignete Software-Programme, ohne Verluste auf der Fügeseite durch erhöhten Schweißeinsatz sehr vorteilhaft reduzieren, da Anzahl und Größe der Rohre keinen Einfluß, wie bislang mit den Verfahren nach dem Stand der Technik, auf den Fügeaufwand ausüben.

Besonders bevorzugt wird die Welle aus Lotmittel oder aber der Lotmittel-Schwall mittels einer Steuerung in Teilbereichen reduziert oder ganz ausgesetzt, um bei großen Abständen der Rohre des Rohrgeflechtes zueinander keine unnötigen Rohstoffverluste durch Lotmittel zu haben. Im Zweifel ist aber im Unterschied zum Stand der Technik auch ein verhältnismäßig kostengünstiges Lotmittel (beispielsweise Barrenlot) für das erfindungsgemäße Verfahren einsetzbar. Auch hierdurch können wiederum Kosten eingespart werden.

Die Lotwelle kann durch Düsen oder andere Vorrichtungen segmentiert werden, um eine gezielte Benetzung streifenförmiger Bereiche auf der zu lötenden Fläche zu ermöglichen.

Von Vorteil ist das Vorsehen von Vorrichtungen zur selektiven oder vollständigen Benetzung mit Flußmitteln durch Sprühen, Zerstäuben oder Schäumen.

Bei dem erfindungsgemäßen Verfahren wird das Prinzip des Schwallötens durch eine laminare oder turbulente Hohl- oder Vollwelle oder einen Lotmittel-Schwall, welches aus der Elektronikindustrie für das Löten von Platinen bekannt ist, sehr vorteilhaft eingesetzt. Dabei werden die mit dem Rohrgeflecht oder den Rohrgeflechten oder den Wärmeleitelementen versehenen Bleche, mittels einer Aufnahmeeinrichtung über die Welle oder den Schwall aus flüssigem Lotmittel kontinuierlich bewegt. Durch die Welle oder den Schwall aus flüssigem Lotmittel werden alle nach unten herausragenden Lötpunkte verlötet. Auf der Unterseite des Bleches sind aber die Rohre des Rohrgeflechtes angeordnet. Diese werden dadurch mit dem Blech von unten verlötet. Die Oberseite des Bleches bleibt dabei völlig unbelastet, wodurch die schwarze Farbe auf der Oberseite des Bleches ebenfalls völlig unbeschädigt bleibt. Vorzugsweise kann aber auch die Welle oder der Lotmittel-Schwall unterhalb des Bleches mit dem Rohrgeflecht entlangbewegt werden. Prinzipiell ist auch eine solche Relativbewegung zwischen Blech mit Rohrgeflecht und Welle bzw. Schwall möglich, bei der sowohl Welle bzw. Schwall als auch das Blech mit Rohrgeflecht gegeneinander bewegt werden. Bei Benetzung mittels der Lotmittel-Welle wird das Blech mit Rohrgeflecht vorzugsweise tangential am Wellenkamm vorbeibewegt (bzw. umgekehrt). Bei der Benetzung mittels Lotmittel-Schwalls wird das Blech mit Rohrgeflecht in einem Winkel α zum Schwall angestellt und relativ zu diesem bewegt. Vorzugsweise fließt der Schwall von einer Stufe oder einem rampenförmigen Element in das Behältnis zurück, wobei im Bereich der Stufe oder Rampe der Kontakt zwischen Blech mit Rohrgeflecht und Lotmittel-Schwall geschaffen wird. Die Bewegungsrichtungen von Lotmittel-Schwall und Blech mit Rohrgeflecht sind dabei bevorzugt entgegengesetzt zueinander.

Besonders bevorzugt wird in dem Behältnis mit dem flüssigen Lotmittel durch ein motorisches und/oder elektromagnetisches Mittel eine turbulente oder laminare Hohl- oder Vollwelle des Lotmittels erzeugt. Diese dient dann als Lotschwall zur Benetzung der Unterseite des Bleches mit dem Rohrgeflecht. Durch entsprechende Wahl der Höhe der Welle, also des Wellenkammes gegenüber dem Wellental, wird bestimmt, welche Rohre noch mit dem Blech zu verbinden sind, und welche nicht mehr. Die Höhe der Welle oder des Wellenkammes kann dabei durch die Drehzahl des motorischen Mittels, welches die Welle erzeugt, oder die Stärke der Lorentzkräfte beim elektromagnetischen Antrieb, verändert werden. In ähnlicher Weise kann durch Ändern der Förderhöhe einer Pumpe als Fördermittel der Lotmittel-Schwall über dem rampenförmigen Element an unterschiedliche Anwendungsfälle angepaßt werden.

Besonders bevorzugt wird durch die Gesamtbreite der Vorrichtung bestimmt, wieviele zu vertötende Bleche und Rohrgeflechte gleichzeitig zusammengefügt und verlötet werden können.

Besonders bevorzugt werden zunächst die Mäander entweder vorgefertigt verwendet, manuell gebogen oder automatisch in einer Mäandriermaschine hergestellt. Das so vorgefertigte Rohrgeflecht wird durch ein Spülbad geleitet und dadurch gereinigt. Dem Behältnis mit dem Lotmittel wird einerseits, beispielsweise von einer Haspel mit einer dahinter angeordneten Richtstrecke für das beschichtete Coil des Bleches, das Blech oder die Finne zugeführt. Ebenso wird diesem Behältnis mit dem Lotmittel das vorgebogene Rohr in Form eines Mäanders oder Rohmetzes zugeführt. Rohrgeflecht und Blech gelangen in überinander angeordneter Position zu dem Behältnis mit dem Fluß- und danach dem Lotmittel, nämlich der eigentlichen Schwall-Lötanlage. Sie werden dort miteinander schwallverlötet. An die Schwall-Lötanlage kann sich dann optional noch ein Spülbad zum Entfernen des überschüssigen Flußmittels und gegebenenfalls zur Abkühlung der gelöteten Einheit anschließen.

Zur näheren Erläuterung der Erfindung werden im folgenden Ausführungsbeispiele anhand der Zeichnungen näher erläutert. Diese zeigen in:
- **Figur 1**: eine perspektivische Ansicht einer Vorrichtung zur Herstellung eines Absorbers,
- **Figur 2**: eine Seitenansicht des gemäß Fig. 1 hergestellten Absorbers,
- **Figur 3**: eine Prinzipskizze des Verfahrensablaufes der Herstellung eines Absorbers gemäß Fig. 2,
- **Figur 4**: eine Seitenansicht einer zweiten Vorrichtung zur Herstellung eines Absorbers,
- **Figur 5**: eine Ansicht ähnlich wie in Figur 1 mit einer alternativen Ausführungsform, und
- **Figur 6**: eine Ansicht ähnlich wie in Figur 3 mit der Ausführungsform aus Figur 5.

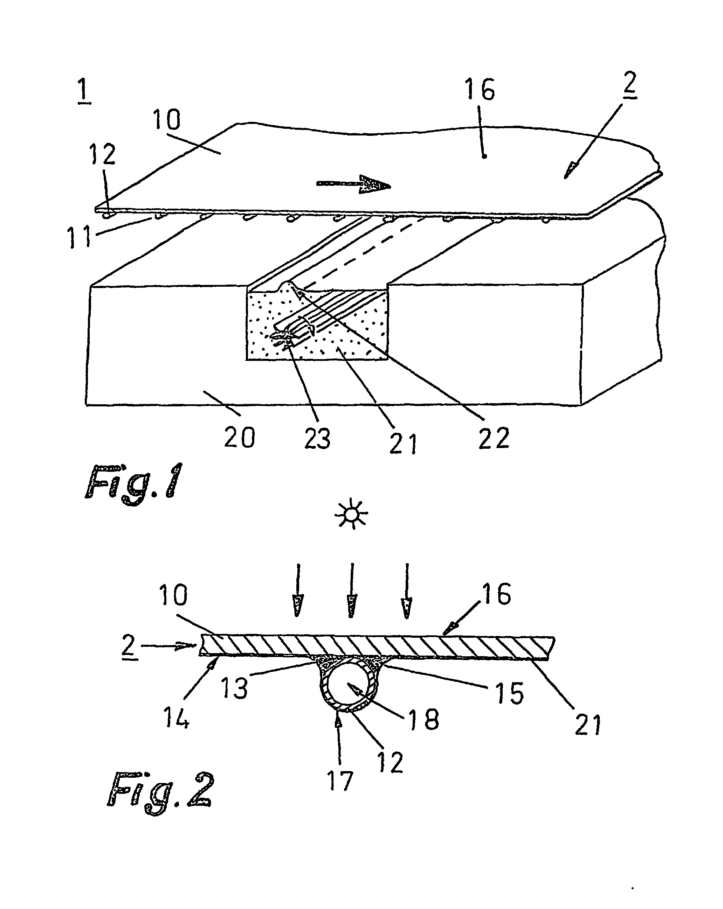

**Figur 1** zeigt eine perspektivische Ansicht einer Vorrichtung 1 zur Herstellung eines Absorbers 2. Ein solcher Absorber 2 weist mit einem Rohrgeflecht 11 versehene Finnen oder Bleche 10 auf. Diese Finnen sind auf ihrer Oberseite 16 schwarz gefärbte oder selektiv beschichtete Bleche (der Übersichtlichkeit wegen in Fig. 1 dennoch hell dargestellt). Die schwarze Farbe oder die selektive Schicht dient der besseren Aufnahme der von der Sonne ausgesandten Strahlen und der damit in das Blech eingeleiteten Wärme bei Verwendung der Absorber in Sonnenkollektoren.

Von dem Rohrgeflecht 11 sind in Fig. 1 lediglich in perspektivischer Schnittdarstellung die einzelnen Rohre 12 zu sehen.

Unterhalb des mit dem Rohrgeflecht 11 versehenen Bleches 10 ist ein Behältnis 20 mit Lotmittel 21 angeordnet. Das Lotmittel wird hier durch ein motorisches Mittel 23, beispielsweise ein Schaufelrad, an einer vorbestimmten Stelle so bewegt und durch eine Düse reduziert, daß eine Welle 22 entsteht. Die Welle 22 ist eine stehende Welle. Die Höhe der Welle wird durch die Drehzahl des motorischen Mittels 23 bestimmt. Sie kann dadurch in Abhängigkeit von der Drehzahl des motorischen Mittels variiert werden. Hinsichtlich ihrer Intensität kann die Welle dadurch gesteuert werden, daß sie beispielsweise (durch Stoppen des motorischen Mittels) vollständig ausgesetzt oder (durch Umlaufen mit geringerer Drehzahl) in Teilbereichen reduziert wird. Sie kann auch durch eine Änderung der Lorentzkräfte beeinflußt werden. Die Welle kann je nach Düsenform eine laminare oder turbulente Vollwelle oder Hohlwelle sein.

Das Lotmittel 21 innerhalb des Behältnisses 20 ist flüssig. Dies bedeutet, daß beispielsweise Barrenlot in dem Behältnis 20 erhitzt wird, so daß das Lotmittel flüssig wird. Dieser Aggregatzustand wird durch ständige Wärmezufuhr mittels einer nicht dargestellten Heizeinrichtung im Behältnis aufrechterhalten. Das motorische Mittel 23 muß also aus einem solchen Material gefertigt sein, daß es trotz des heißen Lotmittels einwandfrei funktioniert und die stehende Welle 22 in dem Lotmittel erzeugt.

Durch die Welle 22 soll das Blech 10 und das Rohrgeflecht 11 von der Unterseite 14 her mit Lotmittel 21 benetzt werden. Dadurch werden Blech und Rohrgellecht miteinander bei Abkühlen des Lotmittels fest verbunden.

Die Benetzung geschieht dabei dadurch, daß eine Relativbewegung zwischen Behälter 20 und Blech 10 mit Rohrgeflecht 11 erzeugt wird. In dem in Fig. 1 dargestellten Falle wird das Blech mit Rohrgeflecht über das ortsfeste Behältnis 20 bewegt. Das Rohrgeflecht und das Blech mit ihren Unterseiten werden so über die stehende Welle 22 geführt, daß sowohl das Rohrgeflecht als auch das Blech von unten benetzt werden. Um Rohrgeflecht und Blech vor dem Benetzen mit dem Lotmittel und dessen Abkühlen aneinander zu fixieren, sind in Fig. 1 nicht dargestellte Aufnahmemittel vorgesehen. Diese halten Blech und Rohrgeflecht fest aneinander, solange dies benötigt wird. Nach dem Abkühlen des Lotmittels werden diese Aufnahmemittel vorteilhaft wieder entfernt, wobei der Absorber dann zur weiteren Fertigung der Solarkollektoren dem nächsten Arbeitsgang zugeführt werden kann.

Anstelle des Vorsehens einer Bewegung von Blech mit Rohrgeflecht kann auch das Behältnis mit dem Lotmittel oder die Welle des Lotmittels selbst an dem stehenden oder aber an dem sich ebenfalls in entgegengesetzter Richtung zu dem Behältnis bewegenden Blech mit Rohrgeflecht vorbeigeführt werden.

Das Ergebnis eines auf diese Art hergestellten Absorbers ist in **Figur 2** in der Schnittansicht dargestellt. Die Finne oder das Blech 10 ist oberhalb des Rohrgeflechtes 11, von dem lediglich ein Rohr 12 im Schnitt dargestellt ist, angeordnet. Das Rohr 12 liegt dabei im wesentlichen an der Unterseite 14 des Bleches 10 an. Zwischen Rohr und Blech verbleibt dabei ein geringfügiger Spalt 13, der bei dem Schwall-Löten bzw. Benetzen über die Welle des Lotmittels, wie dies in Fig. 1 beschrieben ist, geführt wird. Das Lotmittel 21 lagert sich dabei vorteilhaft so in dem Spalt 13 an, daß es zur äußeren Begrenzung Radien 15 bildet. Die Wärmeleitung vom Blech ins Rohr geschieht dadurch optimal entlang der Radien 15.

Die auf die Oberseite 16 der Finne 10 auftreffende Wärme durch Sonnenenergie (stilisiert durch Pfeile und eine Sonne) wird in das Blech weitergeleitet. Beim Übergang des Wärmestroms in das Rohr 12 nimmt erfindungsgemäß nicht nur die tangentiale Kontaktfläche zwischen Blech 10 und Rohr 12 am Wärmetransport teil, sondern auch die mit dem gut wärmeleitendem Lotmittel 21 gefüllten Radien 15. Dadurch verkürzt sich der Wärmetransportweg zum Rohr 12 und dessen innereren Hohlraum 18, was einen positiven Einfluß auf den Rippenwirkungsgrad hat. Im inneren Hohlraum 18 des Rohres 12 ist ein geeignetes Wärmeträgermedium vorgesehen, welches die zugeführte Wärme abführt, von wo sie beispielsweise zu einem Wärmetauscher, der der Solarkollektoranlage angeschlossen ist, geleitet wird. Statt kühlmittelgefüllte Rohre sind auch andere Wärmeleitungselemente denkbar.

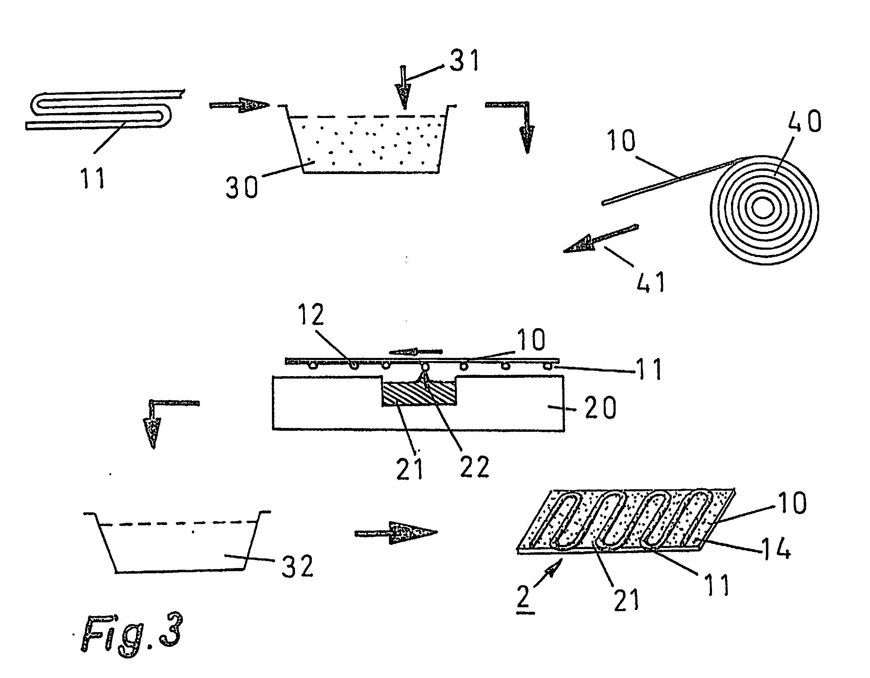

**Figur 3** zeigt eine Prinzipskizze als Ablaufschema einer zweiten Ausführungsform des Verfahrens zur Herstellung eines Absorbers.

In einem ersten Schritt wird dabei ein Mäander oder ein Rohrgeflecht 11 manuell oder automatisch vorgefertigt. Die automatische Vorfertigung kann beispielsweise über eine Mäandriermaschine geschehen. In einem zweiten Schritt wird das vorgefertigte Rohrgeflecht gereinigt durch ein Spülbad 30. Das durch Schäumen oder Sprühen aufgebrachte Flußmittel sorgt dafür, daß das später durch die Welle aufgegebene Lotmittel sich infolge der Reduktion der Oberflächenoxidschicht besser auf der Oberfläche des Rohrgeflechtes verteilt und dadurch auch besser in den jeweiligen Spalt zwischen Rohr und Blech fließt.

Das oder die Bleche 10 bzw. Finnen werden von einer Haspel 40 entnommen und in entsprechend große Stücke, wie sie für die Gesamtabsorder der Solarkollektoren benötigt werden, geschnitten. Vorzugsweise ist dabei die Oberfläche des jeweiligen Bleches der Haspel 40 bereits mit der selektiven Schicht versehen. Um ebene Bleche zu erhalten, wird der jeweilige Blechabschnitt von der Haspel kommend über eine Richtstrecke, die in Fig. 1 lediglich durch einen Pfeil 41 stilisiert ist, geführt.

Das Rohrgeflecht wird dann auf der Unterseite der entsprechend zugeschnittenen Bleche bzw. Finnen 10 angeordnet und dort fixiert, beispielsweise durch nicht dargestellte Aufnahmemittel. Im Anschluß daran folgt das Benetzen mit Lotmittel 21, wie dies bereits zu Fig. 1 geschildert ist.

Nach diesem Schwall-Lötvorgang kann der fertige Absorber, d.h. das mit dem Rohrgeflecht versehene Blech oder die Bleche mit den Rohrgeflechten, durch ein zweites Spülbad 32 geleitet werden. Dabei wird das überschüssige, also nicht benötigte Flußmittel wieder entfernt.

Die letzte Darstellung in Fig. 3 zeigt ein mit einem Rohrgeflecht versehenes Blech, also einen fertigen Absorber 2.

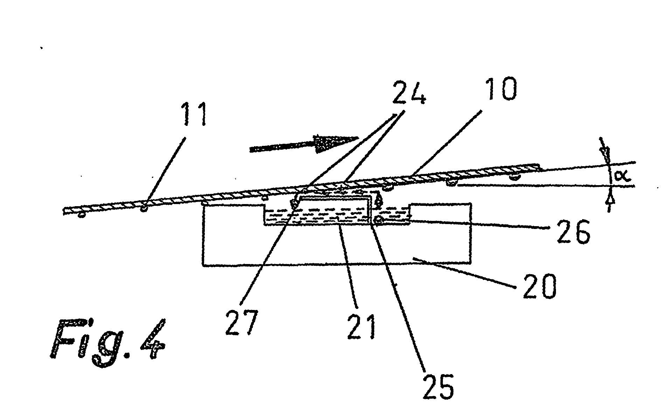

In **Figur 4** ist eine Seitenansicht einer zweiten Vorrichtung 1 zur Herstellung eines Absorbers 2 gemäß Fig. 2 dargestellt. Bei dieser Vorrichtung ist ein Lotmittel-Schwall 24 gebildet oberhalb des Behältnisses 22 mit dem heißen flüssigen Lotmittel 21. Der Lotmittel-Schwall 24 wird dadurch erzeugt, daß ein rampenförmiges Element 25 in dem Lotmittel 21 - oder beispielsweise als gebogenes Blech - angeordnet ist, mittels eines in dem Lotmittel 21 angeordneten Fördermittels 26, beispielsweise einer Pumpe, wird das Lotmittel nach oben in Richtung der Pfeile über das rampenförmige Element 25 hinwegbewegt. Vom Ende des rampenförmigen Elementes 25, also der Kante des gebogenen Bleches beispielsweise, ergießt sich der für das Schwall-Löten verwendete Lotmittel-Schwall 24, ähnlich wie bei einem Wasserfall. Das Lotmittel gelangt dann wieder in das Behältnis 20 zurück.

Oberhalb der Kante 27 des rampenförmigen Elementes 25 wird das Blech 10 mit dem Rohrgeflecht 11 entlangbewegt. Umgekehrt kann natürlich auch das Behältnis 20 mit dem Lotmittel 21 an dem feststehenden Blech 10 mit Rohrgeflecht 11 oder Blech und Behältnis gegenläufig aneinander vorbeibewegt werden. Im Unterschied zu den Vorrichtungen gemäß der vorhergehenden Figuren ist hier das Blech mit dem Rohrgeflecht in einem Winkel α zu der Oberseite des rampenförmigen Elementes 25 angeordnet. Der Winkel α kann beispielsweise zwischen 5° und 10° betragen. Bei anderen Ausführungsformen und -größen der Bleche und der Rohrgeflechte kann er aber auch einen anderen Betrag aufweisen, beispielsweise Winkel zwischen 1° und 10° oder mehr als 10°.

Aufgrund der schrägen Anstellung des Bleches mit Rohrgeflecht in einem Winkel α wird der dünne Lotmittelauftrag durch den Lotmittel-Schwall 24 gewährleistet. Vorzugsweise wird dabei das Blech entgegen der Richtung bewegt, die der Förderrichtung des Lotmittel-Schwalles über dem rampenförmigen Element entspricht. Dies ist in Fig. 4 genau so dargestellt. Aufgrund dieser gegenläufigen Bewegung von Lotmittel-Schwall und bewegtem Blech können die zwischen den einzelnen Rohren 12 und dem Blech 10 verbleibenden Spalte 13 auf der Unterseite des Bleches besonders gut mit dem Lotmittel verfüllt werden. Eine weitere Optimierung kann hierbei, wie bereits erwähnt, durch den Anstellwinkel des Bleches gegenüber dem rampenförmigen Element 25 erfolgen.

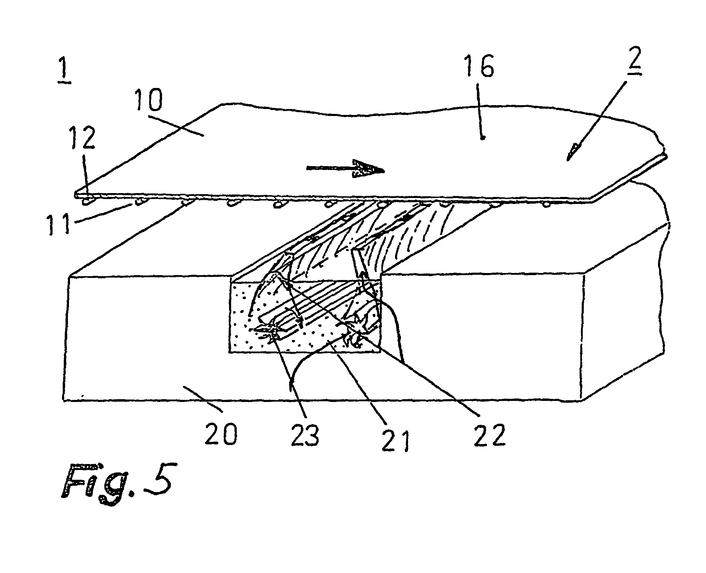

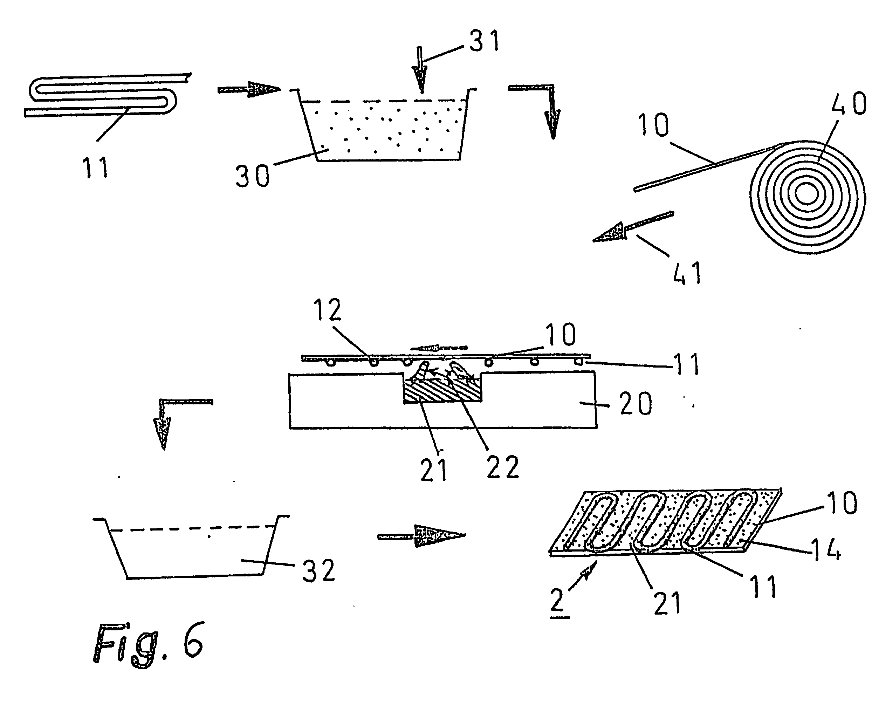

Die **Figuren 5 und 6** zeigen eine alternative Ausführung. Hier wird mittels etwas anderer motorischer Mittel 23 - angedeutet sind zwei gegensinnig laufende Schaufelräder - eine andere, nämlich steilere und zweigeteilte Form einer Welle 22 erzielt, die ebenfalls zur Benetzung der Kombination aus Blech 10 und Wärmeleitelementen bzw. Rohrgeflecht 11 führt.

### Bezugszeichenliste

- 1: Vorrichtung
- 2: Absorber

- 10: Finne / Blech
- 11: Rohrgeflecht
- 12: Rohr
- 13: Spalt
- 14: Unterseite
- 15: Radius
- 16: Oberseite
- 17: Unterseite
- 18: Hohlraum

- 20: Behältnis
- 21: Lotmittel
- 22: Welle
- 23: motorisches Mittel / Schaufelrad
- 24: Lotmittel-Schwall
- 25: rampenförmiges Element
- 26: Fördermittel
- 27: Kante

- 30: Spülbad
- 31: Flußmittel / Pfeil
- 32: Spülbad

- 40: Haspel
- 41: Richtstrecke / Pfeil

## Patentansprüche

1. Verfahren zur Herstellung flächiger Wärmetauscher oder -wandler für Solarkollektoren,
bei dem ein oder mehrere Bleche (10) und ein oder mehrere Wärmeleitelemente (11) mit einem flüssigen Lotmittel (21)in Kontakt gebracht, von diesem benetzt und dadurch verbunden werden,
**dadurch gekennzeichnet,**
**dass** das oder die Wärmeleitelemente (11) das oder die Bleche (10) berühren,
**dass** ein Bereich (22, 24) aus bewegtem flüssigem Lotmittel erzeugt wird,
**dass** dieser Bereich und die Bleche (10) mit Wärmeleitelementen (11) relativ zueinander bewegt werden,
**und dass** die Bleche (10) mit den Wärmeleitelementen simultan verbunden werden.

2. Verfahren nach Anspruch 1,
**dadurch gekennzeichnet,**
**dass** der Bereich aus bewegtem flüssigem Lotmittel als eine oder mehrere Wellen (22) oder Schwalle (24) in einem Behältnis (20) durch das Lotmittel gezielt bewegende Mittel (23) erzeugt wird.

3. Verfahren nach Anspruch 2,
**dadurch gekennzeichnet,**
**dass** der Bereich aus bewegtem flüssigem Lotmittel durch Fördermittel (26) über ein rampenförmiges Element (25) bewegt wird und/oder durch Düsen zu einer Welle geformt wird.

4. Verfahren nach einem der vorstehenden Ansprüche,
**dadurch gekennzeichnet,**
**dass** die Höhe der Welle oder des Schwalls aus Lotmittel durch motorische und/oder elektromagnetische Mittel (23) variiert und an die Dimensionierung von Blechen und Wärmeleitelemente angepasst wird.

5. Verfahren nach Anspruch 4,
**dadurch gekennzeichnet,**
**dass** die Höhe der Welle oder des Schwalls durch unterschiedliche Drehzahlen des die Welle erzeugenden motorischen Mittels (23) oder des den Schwall erzeugenden Fördermittels variiert wird.

6. Verfahren nach einem der vorstehenden Ansprüche,
**dadurch gekennzeichnet,**
**dass** die Welle oder der Schwall hinsichtlich ihrer Intensität gesteuert werden, wobei sie reduziert, insbesondere in Teilbereichen, oder vollständig ausgesetzt werden.

7. Verfahren nach einem der vorstehenden Ansprüche,
**dadurch gekennzeichnet,**
**dass** Bleche und Wärmeleitelemente von unten mit dem flüssigen Lotmittel benetzt werden.

8. Verfahren nach einem der vorstehenden Ansprüche,
**dadurch gekennzeichnet,**
**dass** Bleche und Wärmeleitelemente über die stehenden Wellen (22) oder die Schwalle (24) bewegt werden.

9. Verfahren nach einem der Ansprüche 1 bis 7,
**dadurch gekennzeichnet,**
**dass** die die Bleche und Wärmeleltelemente benetzenden Wellen oder die Schwalle unter diesen vorbeigeführt werden.

10. Verfahren nach einem der vorstehenden Ansprüche,
**dadurch gekennzeichnet,**
**dass** bei Vorsehen eines Schwalls aus Lotmittel zur Benetzung das zu benetzende Blech mit Wärmeleitelement in einem Winkel α zu diesem an diesem vorbeibewegt wird.

11. Verfahren nach Anspruch 10,
**dadurch gekennzeichnet,**
**dass** der Winkel α zwischen 2° und 15° gewählt wird.

12. Verfahren nach einem der vorstehenden Ansprüche,
**dadurch gekennzeichnet,**
**dass** das oder die Wärmeleitelemente (11) manuell oder automatisch vorgefertigt werden,
**dass** die Wärmeleitelemente durch ein Spülbad (30) geleitet und mit Flussmlttel (31) versehen werden,
**dass** das oder die Bleche (10) von einer Haspel (40) über eine Richtstrecke (41) dem Behältnis (20) mit Lotmittel (21) zugeführt werden,
**dass** das oder die vorgebogenen Wärmeleitelemente (11) dem Behältnis (20) mit Lotmittel (21) zugeführt werden,
**dass** das oder die Wärmeleitelemente an dem oder den Blechen fixiert werden, und
**dass** Bleche und Wärmeleitelemente zu einem Absorber (2) verbunden bzw. schwallgelötet werden.

13. Verfahren nach Anspruch 12,
**dadurch gekennzeichnet,**
**dass** die schwallgelöteten Bleche und Wärmeleitelemente zum Entfernen des nicht benötigten Flussmittels (31) durch ein zweites Spülbad (32) geleitet werden.

## Claims

1. , Method for producing flat heat exchangers or converters for solar collectors, in which one or more plates (10) and one or more heat conducting elements (11) are brought into contact with a liquid solder (21), are wetted thereby and thus connected, **characterised in that** the heat conducting element(s) (11) contact(s) the plate(s) (10), **in that** a region (22, 24) is produced out of moved liquid solder, **in that** this region and the plates (10) with heat conducting elements (11) are moved relative to one another, and **in that** the plates (10) are simultaneously connected to the heat conducting elements.

2. Method according to claim 1, **characterised in that** the region made of moved liquid solder is produced by means (23) directed to moving the solder, as one or more waves (22) or surges (24) in a container (20).

3. Method according to claim 2, **characterised in that** the region made of moved liquid solder is moved via a ramp-shape element (25) by conveying means (26) and/or is formed into a wave by nozzles.

4. Method according to any one of the preceding claims, **characterised in that** the height of the wave or the surge of solder is varied by motor and/or electromagnetic means (23) and is adapted to the dimensions of plates and heat conducting elements.

5. Method according to claim 4, **characterised in that** the height of the wave or the surge is varied by different speeds of the motor means (23) producing the wave or of the conveying means producing the surge.

6. Method according to any one of the preceding claims, **characterised in that** the wave or the surge is controlled with respect to the intensity thereof, being reduced, in particular, in partial regions or completely discontinued.

7. Method according to any one of the preceding claims, **characterised in that** plates and heat conducting elements are wetted from below with the liquid solder.

8. Method according to any one of the preceding claims, **characterised in that** the plates and heat conducting elements are moved over the standing waves (22) or the surge (24).

9. Method according to any one of claims 1 to 7, **characterised in that** the waves wetting the plates and heat conducting elements or the surges are guided past therebelow.

10. Method according to any one of the preceding claims, **characterised in that** when a surge of solder is provided for wetting, the plate to be wetted with heat conducting element is moved past the surge at an angle α thereto.

11. Method according to claim 10, **characterised in that** the angle α is selected to be between 2° and 15°.

12. Method according to any one of the preceding claims, **characterised in that** the heat conducting element(s) (11) are pre-manufactured manually or automatically, **in that** the heat conducting elements are guided through a rinsing bath (30) and provided with flux (31), **in that** the plate(s) (10) are supplied from a reel (40) by means of a span (41) to the container (20) with solder (21), **in that** the pre-bent heat conducting element(s) (11) are supplied to the container (20) with solder (21), **in that** the heat conducting element(s) are fixed to the plate(s), and the plates and heat conducting elements are connected or flow-soldered to form an absorber (2).

13. Method according to claim 12, **characterised in that** the flow-soldered plates and heat conducting elements are guided through a second rinsing bath (32) to remove the flux (31) which is not required.

## Revendications

1. Procédé de fabrication d'échangeurs ou convertisseurs thermiques plans pour collecteurs solaires,
dans lequel une ou plusieurs tôle(s) (10) et un ou plusieurs éléments thermoconducteurs (11) sont amenés en contact avec un agent à braser liquide (21), baignés par celui-ci et reliés de ce fait,
**caractérisé en ce**
**que** l'élément ou les élément(s) thermoconducteur(s) (11) entrent en contact avec la ou les tôle(s) (10),
**qu'**une zone (22, 24) est constituée par l'agent à braser liquide déplacé,
**que** cette zone et les tôles (10) comportant les éléments thermoconducteurs (11) sont déplacées relativement l'une à l'autre,
et **que** les tôles (10) sont reliées simultanément avec les éléments thermoconducteurs.

2. Procédé selon la revendication 1,
**caractérisé en ce**
**que** la zone constituée par l'agent à braser liquide déplacé est produite en tant qu'une ou que plusieurs ondulation(s) (22) ou vague(s) (24) dans un récipient (20) par le moyen (23) déplaçant de façon appropriée l'agent à braser.

3. Procédé selon la revendication 2,
**caractérisé en ce**
**que** la zone constituée par l'agent à braser liquide déplacé est déplacée par des moyens de transport (26) sur un élément (25) en forme de rampe et/ou est formé en une ondulation par des buses.

4. Procédé selon l'une des revendications précédentes,
**caractérisé en ce**
**que** la hauteur de l'ondulation ou de la vagué constituée d'un agent à braser varie grâce à des moyens motorisés et/ou électromagnétiques (23) et est adaptée au dimensionnement de tôles et d'éléments thermoconducteurs.

5. Procédé selon la revendication 4,
**caractérisé en ce**
**que** la hauteur de l'ondulation ou de la vague varie sous l'effet des différents nombres de tours du moyen motorisé (23) produisant l'ondulation ou du moyen de transport produisant la vague.

6. Procédé selon l'une des revendications précédentes,
**caractérisé en ce**
**que** l'ondulation ou la vague est commandée pour son intensité, si bien qu'elle est exposée de façon réduite, en particulier dans des zones partielles, ou complètement.

7. Procédé selon l'une des revendications précédentes,
**caractérisé en ce**
**que** les tôles et éléments thermoconducteurs sont baignés par en dessous par l'agent à braser liquide.

8. Procédé selon l'une des revendications précédentes,
**caractérisé en ce**
**que** les tôles et éléments thermoconducteurs sont déplacés sur les ondulations (22) ou les vagues (24) verticales.

9. Procédé selon l'une des revendications 1 à 7,
**caractérisé en ce**
**que** les ondulations ou vagues humidifiant les tôles et éléments thermoconducteurs sont guidées sous celles-ci.

10. Procédé selon l'une des revendications précédentes,
**caractérisé en ce**
**que**, si une vague en agent de brasage est prévue pour baigner, la tôle à baigner, comportant l'élément thermoconducteur est déplacée à un angle α par rapport à celle-ci, le long de celle-ci.

11. Procédé selon la revendication 10,
**caractérisé en ce**
**que** l'angle α est choisi entre 2° et 15°.

12. Procédé selon l'une des revendications précédentes,
**caractérisé en ce**
**que** l'élément ou les élément(s) thermoconducteur (s) (11) sont manuellement ou automatiquement préfabriqué(s),
**que** les éléments thermoconducteurs sont guidés à travers un bain de rinçage (30) et munis de fondant (31),
**que** la ou les tôle(s) (10) est amenée/sont amenées par un treuil (40), sur un parcours directionnel (41), au récipient (20) contenant l'agent à braser (21),
**que** l'élément ou les élément(s) thermoconducteur(s) préalablement cintré(s) (11) est amené/sont amenés au récipient (20) contenant l'agent à braser (21),
**que** l'élément ou les éléments thermoconducteur(s) est fixé/sont fixés sur la ou les tôles, et
**que** les tôles et éléments thermoconducteurs sont reliés et brasés à la vague à un absorbeur (2).

13. Procédé selon la revendication 12,
**caractérisé en ce que** les tôles et éléments thermoconducteurs brasés à la vague sont guidés à travers un deuxième bain de rinçage (32) pour éliminer le fondant (31) non nécessaire.
